Europäisches Patentamt

European Patent Office

Office européen des brevets

(11) Publication number: **0 369 407 A2**

# EUROPEAN PATENT APPLICATION

(21) Application number: **89121081.7**

(22) Date of filing: **14.11.89**

(51) Int. Cl.⁵: **G06F 9/455**

(30) Priority: **14.11.88 JP 288587/88**

(43) Date of publication of application:
**23.05.90 Bulletin 90/21**

(84) Designated Contracting States:
**DE FR GB**

(71) Applicant: **NEC CORPORATION**
**33-1, Shiba 5-chome**
**Minato-ku Tokyo(JP)**

(72) Inventor: **Yamahata, Hitoshi**
**NEC Corporation 33-1 Shiba 5-chome**
**Minato-ku**
**Tokyo(JP)**

(74) Representative: **Betten & Resch**
**Reichenbachstrasse 19**
**D-8000 München 5(DE)**

(54) **Central processing unit for data processor having emulation function.**

(57) A central processing unit for a data processor having an emulation function comprises a register file coupled to supply data to a main data bus and to receive data through the main data bus, and also coupled to output data to a sub data bus, an arithmetic and logic unit having a first input coupled to the main data bus so as to receive data through the main data bus from the register file and a second input coupled to the sub data bus so as to receive data through the sub data bus from the register file, the arithmetic and logic unit having an output coupled to the main data bus so as to output the result of operation to the register file, and a general program status register and an emulation status register respectively coupled to the arithmetic and logic unit so as to receive program status information generated as the result of operation of the arithmetic and logic unit. The general program status register and the emulation status register are also coupled to the main data bus so as to output the program status information and to be loaded with program status information. The general program status register and the emulation status register are controlled in such a manner that when the central processing unit is in an emulating condition, the emulation status register are is brought into an active condition, and when the central processing unit is in a condition other than the emulating condition, the general program status register is brought into an active condition.

## FIGURE 1

# CENTRAL PROCESSING UNIT FOR DATA PROCESSOR HAVING EMULATION FUNCTION

## Background of the Invention

### Field of the invention

The present invention relates to a data processor, and more specifically to a central processing unit for a data processor having an emulation function.

### Description of related art

Conventionally, a central processing unit for use in a data processor having an emulation function includes a register file composed of a group of registers and coupled to a main data bus so as to supply data to the main data bus and to receive data through the main data bus, and also coupled to a sub data bus so as to output data to the sub data bus. In addition, the central processing unit includes an arithmetic and logic unit (called "ALU" hereinafter) having a first input coupled to the main data bus so as to receive data through the main data bus and a second input coupled to the sub data bus so as to receive data through the sub data bus. An output of the ALU is coupled to the main data bus. Further, the arithmetic and logic unit is coupled to output data concerning the result of operation to a program status register (called "PSW" hereinafter). This PSW is also coupled to the main data bus so as to output program status information to the main data bus and to be loaded with program status information through the main data bus. All of the register file, the ALU and the PSW as mentioned above are controlled by an EMULATION signal which indicates that the data processor is under an emulation executing operation.

In the above mentioned conventional processing unit, data read from the register file is supplied to the ALU through the main data bus and the sub data bus, and the result of an operation executed by the ALU is written to the register file through the main data bus. In addition, condition codes such as a carry, an overflow, a sign, zero, etc., which are generated as the result of an operation of the ALU, are supplied to the PSW and latched in various operation flags included in the PSW.

The above mentioned construction and operation of the conventional central processing unit are well known to persons skilled in the art, and therefore, a more detailed description will be omitted.

When the data processor is under the emulation executing operation, the register file, the ALU and PSW are controlled by the EMULATION signal so as to perform respective predetermined operations. For example, a writing to the register file is executed by a length of 32 bits under an ordinary operation (other than the emulation), but by only a length of 16 lower place bits under the emulation executing operation.

In any case, when the above mentioned central processing unit moves into an emulation operation, a content of the PSW is saved through the main data bus to a memory, and thereafter, a program status for emulation is newly loaded to the PSW.

In the above mentioned central processing unit, in other words, it has been necessary to save and load the content of the PSW each time the operation moves into and from the emulation executing condition.

For example, condition codes for the carry, the overflow, the sign and the zero are ordinarily put at bit positions "3", "2", "1" and "0" of the PSW, respectively. Under the emulation executing condition, however, it may be supposed that the above condition codes in a central processing unit to be emulated are at bit positions "0", "11", "7" and "6" of the PSW. In this case in which the PSW arrangement is different between the emulating operation and the operation other than the emulating operation, the conventional central processing unit for emulation has been required to have a switching circuit responding to the EMULATION signal for changing updating positions of condition codes of the PSW.

## Summary of the Invention

Accordingly, it is an object of the present invention to provide a central processing unit which has overcome the above mentioned defect of the conventional one.

Another object of the present invention is to provide a central processing unit for use in a data processor having an emulation function, which central processing unit can easily deal with change of bit arrangement in the PSW between an ordinary operation and an emulation.

A further object of the present invention is to provide a central processing unit for use in a data processor having an emulation function, which central processing unit can easily deal with change of bit arrangement in the PSW, without a switching circuit for changing updating positions of condition codes of the PSW.

The above and other objects of the present invention are achieved in accordance with the present invention by a central processing unit for a data processor having an emulation function comprising register means coupled to a main data bus so as to supply data to the main data bus and to receive data through the main data bus, and also coupled to a sub data bus so as to output data to the sub data bus, an arithmetic and logic unit having a first input coupled to the main data bus so as to receive data through the main data bus from the register means and a second input coupled to the sub data bus so as to receive data through the sub data bus from the register means, the arithmetic and logic unit having an output coupled to the main data bus so as to output the result of operation to the register means, and first and second program status register means coupled to the arithmetic and logic unit so as to receive status information generated as the result of operation of the arithmetic and logic unit, the first and second program status register means being also coupled to the main data bus so as to output the status information and to be loaded with status information, the first and second program status register means being controlled in such a manner that when the central processing unit is in an emulating condition, the second program status register is brought into an active condition, and when the central processing unit is in a condition other than the emulating condition, the first program status register means is brought into an active condition.

The above and other objects, features and advantages of the present invention will be apparent from the following description of preferred embodiments of the invention with reference to the accompanying drawings.

Brief Description of the Drawings

Figure 1 is a block diagram of a first embodiment of the central processing unit in accordance with the present invention; and
Figure 2 is a diagram similar to Figure 1 but showing a second embodiment of the central processing unit in accordance with the present invention.

Description of the Preferred embodiments

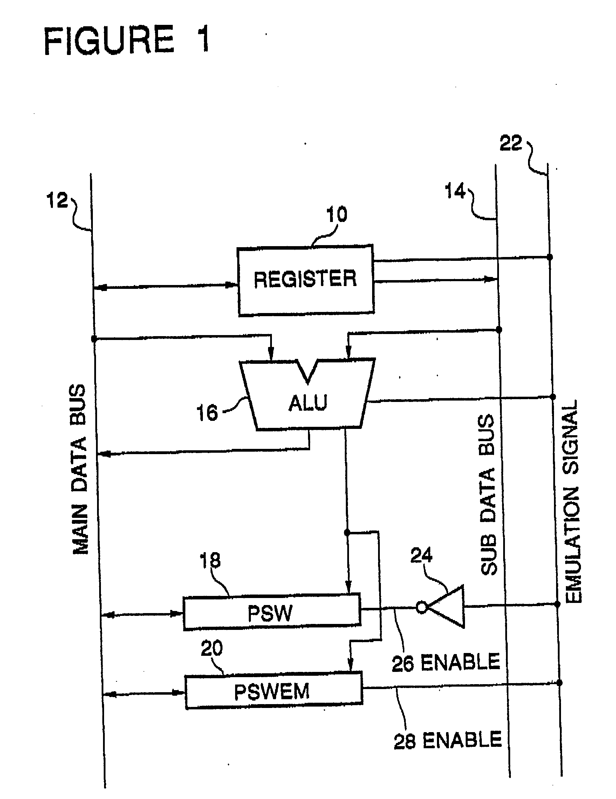

Referring to Figure 1, there is shown a diagram of a first embodiment of the central processing unit in accordance with the present invention. The shown central processing unit includes a register file 10 composed of a group of registers and coupled to a main data bus 12 so as to supply data to the main data bus 12 and to receive data through the main data bus 12, and also coupled to a sub data bus 14 so as to output data to the sub data bus 14. In addition, there is provided an ALU 16 having a first input coupled to the main data bus 12 and a second input coupled to the sub data bus 14. An output of the arithmetic and logic unit 16 is coupled to the main data bus 12. Further, the ALU 16 is coupled to output data concerning the result of operation to two program status registers, namely a PSW 18 and a PSWEM 20. The PSW 18 and a PSWEM 20 are coupled to the main data bus 12 so as to output program status information to the main data bus 12 and to be loaded with program status information through the main data bus 12.

In addition, the register file 10 and the ALU 16 are controlled by an EMULATION signal 22 which indicates that the data processor is under emulation operation. The PSW 18 is connected to receive the EMULATION signal 22 through an inverter 24 as an enable signal 26, and on the other hand, the PSWEM 20 is connected to directly receive the EMULATION signal 22 as an enable signal 28.

In the above mentioned arrangement, the PSW 18 is used for an ordinary or general operation other than an emulation executing operation, and the PSWEM 20 is used only for the emulation executing operation.

In the above mentioned central processing unit, similarly to the conventional central processing unit, data read from the register file 10 is supplied to the ALU 16 through the main data bus 12 and the sub data bus 12, and the result of an operation executed by the ALU 16 is written to the register file 10 through the main data bus 12. At this time, if the EMULATION signal 22 is inactive, an active enable signal 26 is supplied to the general PSW 18 so that the general PSW 18 is used. On the other hand, since the enable signal 28 supplied to the PSWEM 20 is inactive, the PSWEM 20 is not used. Therefore, condition codes such as a carry, an overflow, sign, zero, etc., which are generated as the result of an operation of the ALU 16, are latched in various operation flags included in the general PSW 18.

If it is under the emulation executing condition, the EMULATION signal 22 is rendered active, and therefore, the active enable signal 28 is supplied to the PSWEM 20 so that the PSWEM 20 is used, and on the other hand, since the enable signal 26 is supplied to the general PSW 18 is inactive so that general SPW 18 is not used. Therefore, the condition codes generated as the result of an operation of the ALU 16 are latched in the PSWEM 20.

As seen from the above, with provision of the PSWEM 20 exclusively used for the emulation operation, if a processing such as interrupt operation which is required to use a PSW is performed in the course of the emulation executing operation, the interrupt operation can be executed at a high speed without saving and loading the PSW. In addition, even if the bit arrangement of the PSW is greatly different between the PSWEM 20 used when the emulation is executed and the general PSW 18 used when an cperation other than the emulation is executed, it is sufficient in order to update the condition codes if either the PSWEM 20 of the general PSW18 is alternatively selected by the enable signal 26 and 28. Therefore, the circuit construction is very simple.

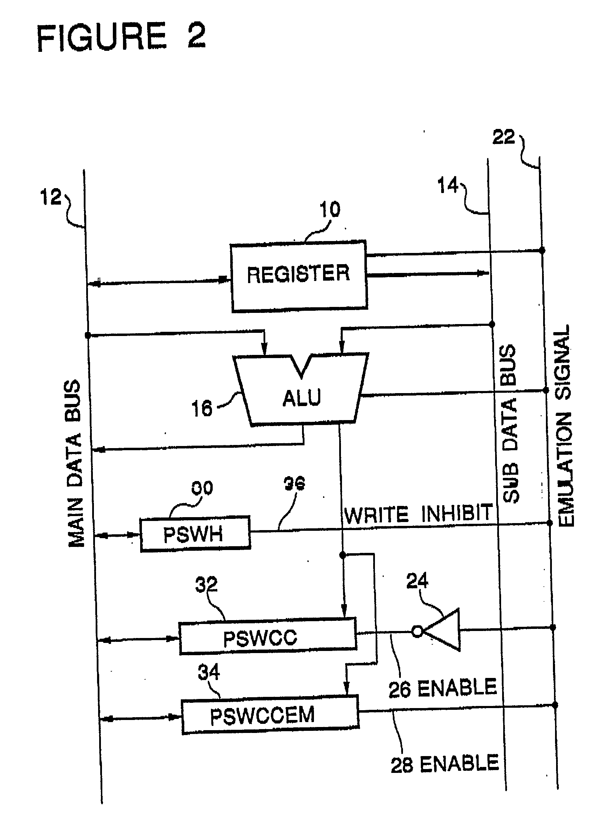

Turning to Figure 2, there is shown a diagram of a second embodiment of the central processing unit in accordance with the present invention. In Figure 2, elements similar to those shown in Figure 1 are given the same Reference Numerals, and therefore, explanation thereof will be omitted.

As seen from comparison between Figures 1 and 2, the second embodiment includes three program status registers, PSWH 30, PSWCC 32 and PSWCCEM 34, in place of the general PSW 18 and the PSWEM 20. The PSWH 30 is used to hold a field indicating the condition of the ALU 16 regardless of whether the processor is in the emulation executing operation or in an ordinary operation other than the emulation executing operation. The PSWCC 32 and PSWCCEM 34 are used to hold a field such as condition codes which are different in bit arrangement depending upon whether the processor is in the emulation executing operation or in an ordinary operation other than the emulation executing operation. Specifically, the PSWCC 32 is used for the ordinary operation and PSWCCEM 34 is used only for the emulation executing operation.

The PSWH 30, the PSWCC 32 and the PSWCCEM 34 are coupled to the main data bus 12 to so as to output program status information to the main data bus 12 and to receive program status information through the main data bus 12. The PSWH 30 is connected to receive the EMULATION signal 22 as a write inhibition signal. The PSWCC 32 is connected to receive the EMULATION signal through the inverter 24 as the enable signal 26, and on the other hand, the PSWCCEM 34 is connected to directly receive the EMULATION signal 22 as the enable signal 28.

In the above mentioned second embodiment of the central processing unit, similarly to first embodiment, data read from the register file 10 is supplied to the ALU 16 through the main data bus 12 and the sub data bus 12, and the result of an operation executed by the ALU 16 is written to the register file 10 through the main data bus 12.

If the EMULATION signal 22 is inactive, namely, if the processor is in an operation other than the emulation, the condition codes generated as the result of an operation of the ALU 16 are latched in the PSWCC 32. The field indicating the condition of the ALU 16 is written to the PSWH 30 since the PSWH 30 is writable when the EMULATION signal 22 is inactive. On the other hand, when the PSW is read out in the course of the ordinary operation execution, contents of the PSWH 30 and PSWCC 32 are cutputted to corresponding different fields of the main data bus 12, respectively, so that the PSWH 30 and PSWCC 32 cooperate to function as one PSW for supplying a program status to the main data bus 12.

If the EMULATION signal 22 is active, namely, if the processor is in the emulation executing condition, the condition codes generated as the result of an operation of the ALU 16 are latched in the PSWCCEM 34. However, when the EMULATION signal 22 is active, the PSWH 30 is not writable. On the other hand, when the PSW is read out in the course of the emulation executing operation, contents of the PSWH 30 and PSWCCEM 34 are outputted to corresponding different fields of the main data bus 12, respectively, so that the PSWH 30 and PSWCCEM 34 cooperate to function as one PSW for supplying a program status to the main data bus 12.

In this second embodiment, it is possible to confine or restrict the field which is allowed to be updated in the course of the emulation executing operation. Therefore, it is possible to protect the status of the central processing unit from being unexpectedly changed by a program under emulation.

As seen from the above description of the embodiments, the central processing unit in accordance with the present invention is characterized by provision of an program status register exclusively used for the emulation, in addition to a general status register. This feature makes it possible to simplify a circuit for updating the program status register, so that it is possible to easily meet with the great change of bit arrangement in the program status register between the ordinary operation and the emulation executing operation. In addition, by putting a predetermined field of the program status register into a condition unallowable to be updated in the course of the emulation executing operation, the protection of status is very easy.

The invention has thus been shown and described with reference to the specific embodiments. However, it should be noted that the present invention is in no way limited to the details of the illustrated structures but changes and modifications may be made within the scope of the appended claims.

**Claims**

1. A central processing unit for a data processor having an emulation function comprising register means coupled to a main data bus so as to supply data to the main data bus and to receive data through the main data bus, and also coupled to a sub data bus so as to output data to the sub data bus, an arithmetic and logic unit having a first input coupled to the main data bus so as to receive data through the main data bus from the register means and a second input coupled to the sub data bus so as to receive data through the sub data bus from the register means, the arithmetic and logic unit having an output coupled to the main data bus so as to output the result of operation to the register means, and first and second program status register means coupled to the arithmetic and logic unit so as to receive status information generated as the result of operation of the arithmetic and logic unit, the first and second program status register means being also coupled to the main data bus so as to output the status information and to be loaded with status information, the first and second program status register means being controlled in such a manner that when the central processing unit is in an emulating condition, the second program status register is brought into an active condition, and when the central processing unit is in a condition other than the emulating condition, the first program status register means is brought into an active condition.

2. A central processing unit claimed in Claim 1 wherein the first program status register means receives as an enable signal through an inverter an emulation signal which is rendered active when the central processing unit is in an emulation executing condition, and the second program status register means receives as an enable signal the emulation signal

3. A central processing unit for a data processor having an emulation function comprising register means coupled to a main data bus so as to supply data to the main data bus and to receive data through the main data bus, and also coupled to a sub data bus so as to output data to the sub data bus, an arithmetic and logic unit having a first input coupled to the main data bus so as to receive data through the main data bus from the register means and a second input coupled to the sub data bus so as to receive data through the sub data bus from the register means, the arithmetic and logic unit having an output coupled to the main data bus so as to output the result of operation to the register means, a first program status register means coupled to the main data bus to hold a field indicating a condition of the arithmetic and logic unit regardless of whether the arithmetic and logic unit is in an emulation executing condition or in a condition executing an operation other than the emulation, second and third program status register means coupled to the arithmetic and logic unit so as to receive status information generated as the result of operation of the arithmetic and logic unit, the second and third program status register means being also coupled to the main data bus so as to output the status information and to be loaded with status information, the second and third program status register means being controlled in such a manner that when the central processing unit is in the emulation executing condition, the third program status register is brought into an active condition, and when the central processing unit is in the condition executing the operation other than the emulation, the second program status register means is brought into an active condition.

4. A central processing unit claimed in Claim 3 wherein the second program status register means receives as an enable signal through an inverter an emulation signal which is rendered active when the central processing unit is in an emulation executing condition, and the third program status register means receives as an enable signal the emulation signal

5. A central processing unit claimed in Claim 4 wherein the first program status register means receives the emulation signal as a write inhibition signal so that when the central processing unit is in the emulation executing condition, a writing of the first program status register means is inhibited.

# FIGURE 1

FIGURE 2